(19) Europäisches Patentamt
European Patent Office
Office européen des brevets

(11) **EP 1 770 280 B1**

(12) **EUROPEAN PATENT SPECIFICATION**

(45) Date of publication and mention of the grant of the patent:
**08.10.2008 Bulletin 2008/41**

(51) Int Cl.:
*F04C 15/00* (2006.01)   *F04C 23/00* (2006.01)
*F04C 29/00* (2006.01)   *F04B 39/00* (2006.01)
*F04B 53/00* (2006.01)

(21) Application number: **06018185.6**

(22) Date of filing: **31.08.2006**

(54) **Compressor with induction electric element**

Kompressor mit elektrischem Induktionselement

Compresseur avec élément électrique d'induction

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.09.2005 JP 2005289025**
**16.11.2005 JP 2005330940**

(43) Date of publication of application:
**04.04.2007 Bulletin 2007/14**

(73) Proprietor: **SANYO ELECTRIC CO., LTD.**
**Moriguchi-shi, Osaka-fu (JP)**

(72) Inventor: **Nakayama, Yoshitomo**
**Ota-shi**
**Gunma-ken (JP)**

(74) Representative: **Leitner, Waldemar**
**porta patent- und rechtsanwälte**
**Zerrennerstrasse 23-25**
**75172 Pforzheim (DE)**

(56) References cited:
**WO-A2-01/28070**          **DE-A1- 19 743 321**
**US-A- 4 881 879**          **US-A- 5 233 254**

**Description**

## BACKGROUND OF THE INVENTION

Field of the Invention

The present invention relates to an induction electric element housed compressor, and more particularly to a reliable induction electric element housed compressor capable of preventing a stator core from touching a rotor core at the time of starting or the like.

Description of the Related Art

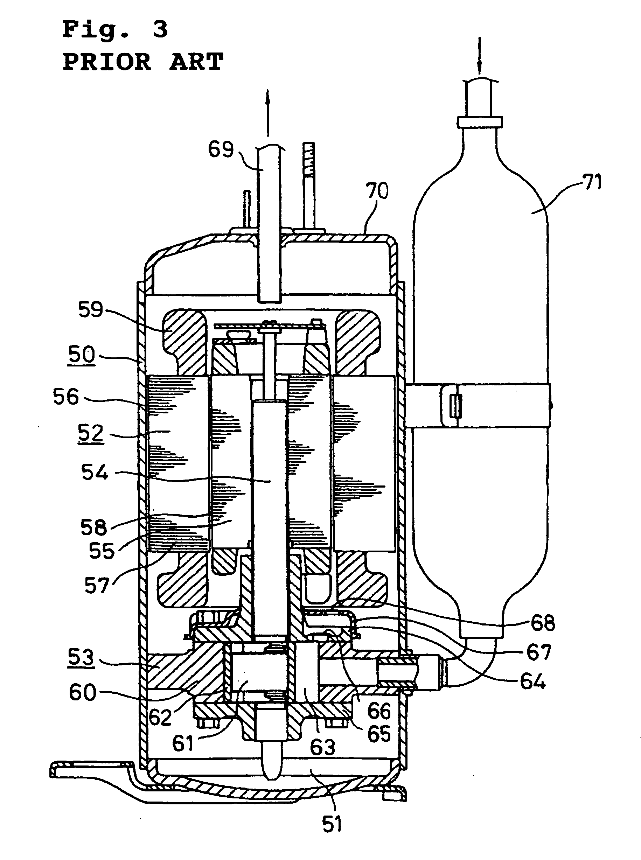

A conventional hermetic compressor is shown in section in Fig. 3.

The reference numeral 50 denotes a hermetic container having an oil storage 51 that stores oil in the bottom. The container houses an induction electric element 52 in an upper portion and a rotation compressive element 53 in a lower portion. The induction electric element 52 includes a rotor core 55 installed on a rotation axis 54, and a stator core 57 having an oil return hole 56 formed in the outer circumference. The reference numeral 58 denotes an air gap formed between the outer circumference of the rotor core 55 and the inner circumference of the stator core 57. The reference numeral 59 denotes a coil end of a winding contained in the stator core 57. The rotation compressive element 53 includes a cylinder 60, a roller 62 that is forced to rotate within the cylinder 60 by an eccentric portion 61 of the rotation axis 54, and a vane 63 that adjoins the roller to divide the inside of the cylinder 60. The rotation compressive element also includes an upper bearing portion 64 and a lower bearing portion 65 provided to close the openings of the cylinder, a discharge valve 66 attached to the upper bearing portion, and a cup muffler 67 that covers the discharge valve. The reference numeral 68 denotes a discharge hole provided in the cup muffler 67. The reference numeral 69 denotes a refrigerant discharge pipe provided through the center of the upper portion of the hermetic container 50, which is tightly closed by bonding an end cap 70 thereto. The reference numeral 71 denotes an accumulator. The arrow indicates the flow of the refrigerant.

In the hermetic compressor thus structured, the refrigerant compressed at the rotation compressive element 53 is sent out through the air gap 58 of the induction electric element 52 to the upper portion of the electric element. From the refrigerant sent out to the upper portion of the induction electric element 52, the oil contained therein is separated by a centrifugal force caused from rotations of the rotor core 55. The separated oil is scattered toward the stator core 57. The refrigerant is discharged through the refrigerant discharge pipe 69 to external from the hermetic container 50. The separated oil returns from the oil return hole 56 formed in the outer circumference of the stator core 57 to the oil storage 51 in the hermetic container 50.

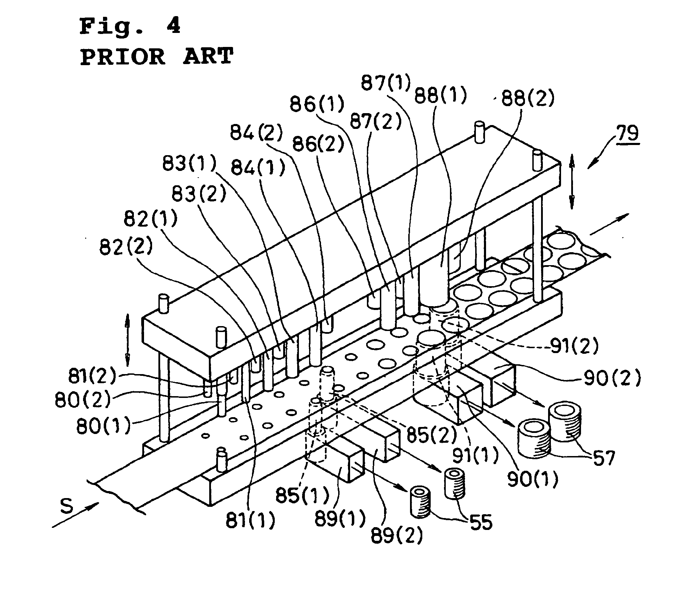

Fig. 4 is an illustrative view illustrating a punch for manufacturing the rotor core 55 and the stator core 57 of prior art (see Patent Document 1: JP Patent No. 3,557,046).

In Fig. 4 the reference numeral 79 denotes a punch for manufacturing the rotor core 55 and the stator core 57. The punch 79 includes a plurality of punching male molds [80(1)-84(1) in the first line and 80(2)-84(2) in the second line] for manufacturing rotor core members and a plurality of punching male molds [86(1)-88(1) in the first line and 86(2)-88(2) in the second line] for manufacturing stator core members in the upper portion; and a plurality of punching female molds in the lower portion corresponding to the above respective male molds.

A steel belt S is supplied continuously in between the male molds and the female molds while the male molds are moved up and down to punch out the steel belt S at required locations in two lines zigzag along the width and sequentially along the length to manufacture the rotor core members having a plurality of crimps.

The reference numerals 85(1) and 85(2) denote female molds for producing the rotor core by pressurizing and automatically stacking a required number of the rotor core members, and 89(1) and 89(2) denote outlets for extracting the rotor core 55 therefrom.

The steel belt S from which the rotor core members have been punched out is further subjected to punching out the outer circumferential portions at required locations in turn to produce the stator core members having a plurality of crimps. A required number of the stator core members are automatically stacked to produce the stator core 57. The reference numerals 91(1) and 91 (2) denote female molds for producing the stator core 57 by pressurizing and automatically stacking a required number of the stator core members, and 90(1) and 90(2) denote outlets for extracting the stator core 57 therefrom.

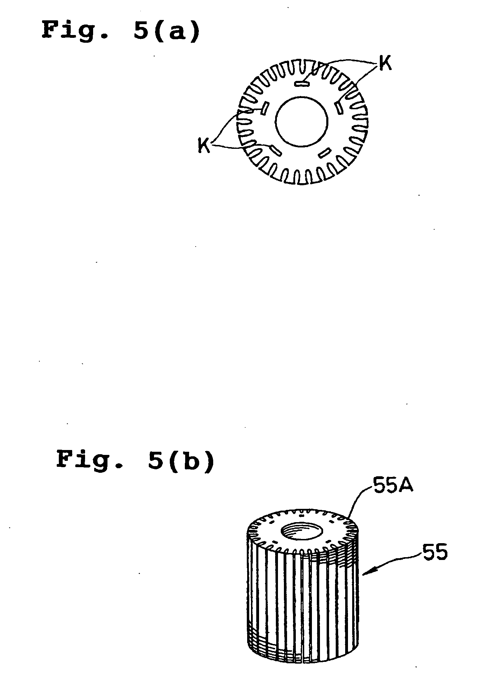

Fig. 5(a) is an illustrative view showing an example of the rotor core member manufactured through the above method, and (b) is an illustrative view showing the rotor core 55 produced by pressurizing and stacking a required number of the rotor core members. The reference symbol K in the figure denotes a crimp.

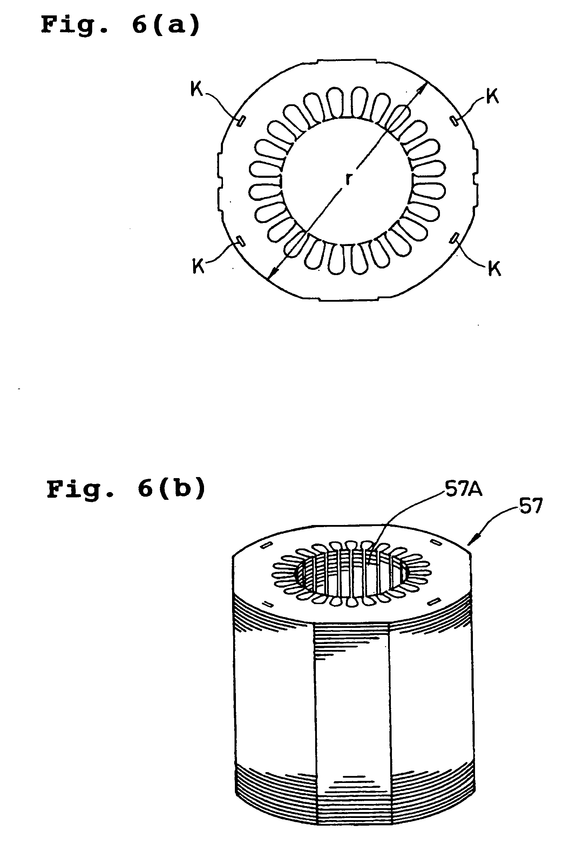

Fig. 6(a) is an illustrative view showing an example of the stator core member manufactured through the above method, and (b) is an illustrative view showing the stator core 57 produced by pressurizing and stacking a required number of the stator core members. The reference symbol K in the figure denotes a crimp.

In the conventional hermetic compressor, at the time of starting or frequently repeating starting-running, the outer circumference of the upper end 55A of the rotor core 55 attached to the rotation shaft 54 may contact the inner circumference of the upper end 57A of the stator core 57. This may result in damage to the upper end 55A and the upper end 57A, which leads to a suction failure, a reduction in performance, and a halt of running as a critical problem. Therefore, the location where the outer circumference of the upper end 55A of the rotor core 55 contacts the inner circumference of the upper end 57A of the stator core 57 has been subjected to cutting and heating. This is effective to reduce the outer diameter of the upper end 55A and prevent both from contacting with each other. The processes of cutting and heating increase the process steps correspondingly and even a skilled person requires time and effort for a precise finish, which results in an increase in cost as a problem.

A compressor with an induction electric element having the features of the preamble of claims 1 and 3, namely a compressor with an electric induction element comprising: a hermetic container; a compressive element housed in a lower portion of the container; and an induction electric element housed in an upper portion of the container, the induction electric element including a stator core fixedly attached on an inner wall of the hermetic container to drive the compressive element, and a rotor core attached to a rotation axis and inserted in the stator core, the compressive element operative to compress a refrigerant led therein and discharge the compressed refrigerant to external from the hermetic container, is known from US-A-4 881 879. The known compressor still exhibits the afore-discussed problems, in particular that at the time of starting or frequently repeating starting-running, the stator may touch the rotor, in particular when the deflections perpendicular to the rotor axis caused by vibrations are maximal.

US-A-5 233 254 discloses an induction motor having a cantilever supported rotor with rotor laminations, which can be periodically stepped to solve the problem of contact between rotor and stator due to vibrations.

SUMMARY OF THE INVENTION

The present invention has an object to solve the conventional problems and provide a reliable compressor with an induction electric element capable of preventing a stator core from contacting a rotor core, thereby achieving stable running over a long period even at the time of starting or frequently repeating starting-running.

To solve the above problems, in a first aspect the present invention provides a compressor with an induction electric element wherein the stator core has a stator lower portion formed by automatically stacking a required number of stator core members (A) having a certain inner diameter such that an appropriate air gap is retained between the stator lower portion and the rotor core, a stator upper portion formed adjacent to the stator lower portion by automatically stacking a required number of stator core members (B) having a larger inner diameter than the inner diameter of the stator lower portion, and a stepped portion formed on a position where the stator lower portion adjoins the stator upper portion wherein L1 denoting a length of the stator upper portion and L2 denoting a total length of [(the length of the stator upper portion) + (the length of the stator lower portion)] have a relation represented by the following expression (1), and D1 denoting the inner diameter of the stator lower portion and D2 denoting the inner diameter of the stator upper portion have a relation represented by the following expression (2):

$$[(L1)/(L2)] \times 100 = 0.01\text{-}50\ (\%) \qquad \ldots (1)$$

$$[(D1)/(D2)] \times 100 = 80\text{-}99.99\ (\%) \qquad \ldots (2).$$

To solve the above problems, in a second aspect the present invention provides compressor with an induction electric element, wherein the rotor core has a rotor lower portion formed by automatically stacking a required number of rotor core members (C) having a certain outer diameter such that an appropriate air gap is retained between the rotor lower portion and the stator core, a rotor upper portion formed adjacent to the rotor lower portion by automatically stacking a required number of rotor core members (D) having a smaller outer diameter than the outer diameter of the rotor lower portion, and a stepped portion formed on a position where the rotor lower portion adjoins the rotor upper portion, and wherein L3 denoting a length of the rotor upper portion and L4 denoting a total length of [(the length of the rotor upper portion) + (the length of the rotor lower portion)] have a relation represented by the following expression (3), and R2 denoting the outer diameter of the rotor lower portion and R1 denoting the outer diameter of the rotor upper portion have a relation represented by the following expression (4):

$$[(L3)/(L4)] \times 100 = 0.01\text{-}50 \,(\%) \qquad \dots (3)$$

$$[(R1)/(R2)] \times 100 = 80\text{-}99.99 \,(\%) \qquad \dots (4).$$

In this case, instead of cutting and heating the outer circumference of the upper end of the rotor core as performed conventionally, the compressor uses the stator core formed by automatically stacking respective required numbers of stator core members (A) and (B) to form a stepped portion on a position where the stator lower portion adjoins the stator upper portion. Accordingly, it is possible to form a low-cost, high-precision induction electric element with a suppressed increase in process steps. The use of this induction electric element prevents the outer circumference of the upper end of the rotor core from contacting the inner circumference of the upper end of the stator core even at the time of starting or frequently repeating starting-running. Therefore, it is possible to provide a reliable compressor with an induction electric element housed capable of achieving stable running over a long period as a remarkable effect.

In the compressor according to the first aspect of the present invention, L1 denoting a length of the stator upper portion and L2 denoting a total length of [(the length of the stator upper portion) + (the length of the stator lower portion)] have a relation represented by the above expression (1), and D1 denoting the inner diameter of the stator lower portion and D2 denoting the inner diameter of the stator upper portion have a relation represented by the above expression (2). Thus, the outer circumference of the upper end of the rotor core can be further reliably prevented from contacting the inner circumference of the upper end of the stator core even at the time of starting or frequently repeating starting-running. Therefore, it is possible to provide a reliable induction electric element housed compressor capable of achieving stable running over a long period as a further remarkable effect.

The compressor with an induction electric element provides that according to the second aspect of the present invention the rotor core has a rotor lower portion formed by automatically stacking a required number of rotor core members (C) having a certain outer diameter such that an appropriate air gap is retained between the rotor lower portion and the stator core, a rotor upper portion formed adjacent to the rotor lower portion by automatically stacking a required number of rotor core members (D) having a smaller outer diameter than the outer diameter of the rotor lower portion, and a stepped portion formed on a position where the rotor lower portion adjoins the rotor upper portion.

In this case, instead of cutting and heating the outer circumference of the upper end of the rotor core as performed conventionally, the compressor uses the rotor core formed by automatically stacking respective required numbers of rotor core members (C) and (D) to form a stepped portion on a position where the rotor lower portion adjoins the rotor upper portion. Accordingly, it is possible to form a low-cost, high-precision induction electric element with a suppressed increase in process steps. The use of this induction electric element prevents the outer circumference of the upper end of the rotor core from contacting the inner circumference of the upper end of the stator core even at the time of starting or frequently repeating starting-running. Therefore, it is possible to provide a reliable induction electric element housed compressor capable of achieving stable running over a long period as a remarkable effect.

In the compressor according to this aspect of the present invention, L3 denoting a length of the rotor upper portion and L4 denoting a total length of [(the length of the rotor upper portion) + (the length of the rotor lower portion)] have a relation represented by the above expression (3), and R2 denoting the outer diameter of the rotor lower portion and R1 denoting the outer diameter of the rotor upper portion have a relation represented by the above expression (4). Thus, the outer circumference of the upper end of the rotor core can be further reliably prevented from contacting the inner circumference of the upper end of the stator core even at the time of starting or frequently repeating starting-running. Therefore, it is possible to provide a reliable compressor with an induction electric element capable of achieving stable running over a long period as a further remarkable effect.

BRIEF DESCRIPTION OF THE DRAWINGS

Fig. 1(a), (b) and (c) are illustrative views illustrating an embodiment associated with a stator core in a compressor of the present invention;
Fig. 2(a), (b) and (c) are illustrative views illustrating an embodiment associated with a rotor core in the compressor of the present invention;
Fig. 3 is an illustrative view illustrating a hermetic compressor in section;
Fig. 4 is an illustrative view illustrating a punch for manufacturing the stator core and the rotor core;
Fig. 5 provides (a) an illustrative view showing an example of a rotor core member and (b) an illustrative view showing a rotor core formed by pressurizing and stacking a required number of such rotor core members of prior art; and

Fig. 6 provides (a) an illustrative view showing an example of a stator core member and (b) an illustrative view showing a stator core formed by pressurizing and stacking a required number of such stator core members of prior art.

DETAILED DESCRIPTION OF THE INVENTION

The embodiments of the present invention will now be described in detail with reference to the drawings.

(First Embodiment)

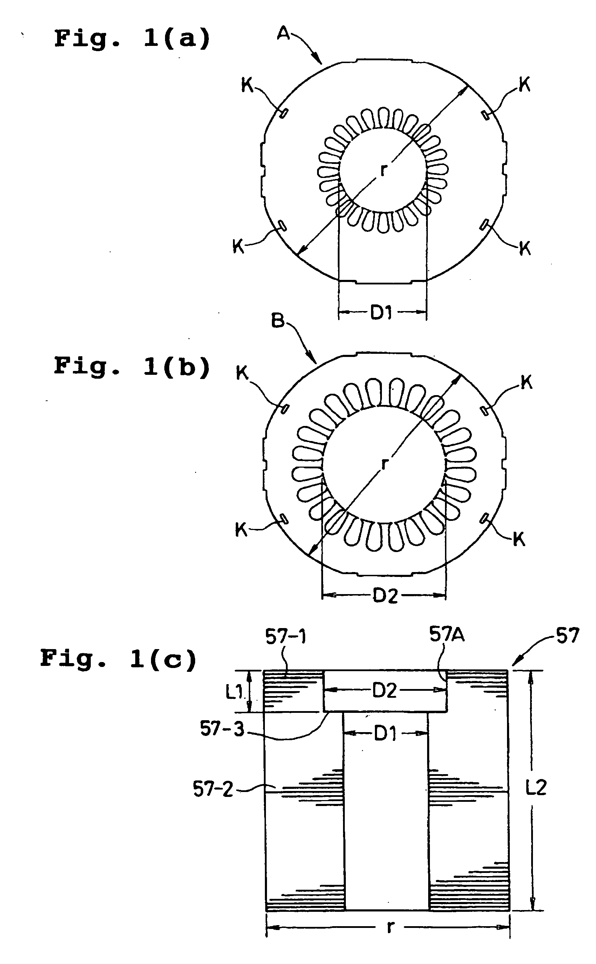

Fig. 1 (a), (b) and (c) are illustrative views illustrating an embodiment associated with a stator core in a compressor of the present invention.
Fig. 1(a) is an illustrative view illustrating a stator core member A for use in formation of a stator lower portion 57-2 of a stator core 57 in the compressor of the present invention.
Fig. 1(b) is an illustrative view illustrating a stator core member B for use in formation of a stator upper portion 57-1 of the stator core 57 in the compressor of the present invention.
Fig. 1(c) is an illustrative view illustrating the stator core 57 in the compressor of the present invention.

The stator core 57 is formed by pressurizing and automatically stacking a required number of stator core members A having a certain inner diameter (D1) such that an air gap formed between the inner circumference of the stator lower portion 57-2 and the outer circumference of a rotor core 55 (not shown) is retained at an appropriate value. A stator upper portion 57-1 adjacent to the stator lower portion 57-2 is formed by pressurizing and automatically stacking a required number of stator core members B having a larger inner diameter (D2) than the inner diameter (D1). A stepped portion 57-3 is formed on a position where the stator lower portion 57-2 adjoins the stator upper portion 57-1 in the stator core 57. Others are similar to those of the stator core 57 shown in Fig. 6. The stator lower portion 57-2 and the stator upper portion 57-1 have the same outer diameter of r.
In order to manufacture the stator core members A, B and the stator core 57, the punch shown in Fig. 4 is reconstructed. A steel belt S is then supplied continuously in between the male molds and the female molds while the male molds are moved up and down to punch out the steel belt S at required locations in two lines zigzag along the width and sequentially along the length to automatically manufacture the stator core members A, B having a plurality of crimps. A required number of the manufactured stator core members A are automatically and sequentially pressurized and stacked to form the stator lower portion 57-2. In addition, a required number of the stator core members B are automatically and sequentially pressurized and stacked thereon to form the stator upper portion 57-1, thus producing the stator core 57.
Preferably, L1 denoting a length of the stator upper portion 57-1 and L2 denoting a total length of [(the length L1 of the stator upper portion 57-1) + (the length of the stator lower portion)] have a relation represented by the following expression (1), and D1 denoting the inner diameter of the stator lower portion 57-2 and D2 denoting the inner diameter of the stator upper portion 57-1 have a relation represented by the following expression (2):

$$[(L1)/(L2)] \times 100 = 0.01\text{-}50 \ (\%) \quad \dots\dots (1)$$

$$[(D1)/(D2)] \times 100 = 80\text{-}99.99 \ (\%) \quad \dots\dots (2).$$

If [(L1)/(L2)] $\times$ 100 has a value below 0.01 (%), the outer circumference of the upper end 55A of the rotor core 55 (not shown) may not be prevented from contacting the inner circumference of the upper end 57A of the stator core 57 possibly at the time of starting or frequently repeating starting- running. If it exceeds 50 (%), the running property is worsened.
If [(D1)/(D2)] $\times$ 100 has a value below 80 (%), the running property is worsened. If it exceeds 99.99 (%), the outer circumference of the upper end 55A of the rotor core 55 (not shown) may not be prevented from contacting the inner circumference of the upper end 57A of the stator core 57 possibly at the time of starting or frequently repeating starting-running.
The compressor according to the first embodiment of the present invention is similar to the compressor shown in Fig. 3 except for the use of the above stator core 57 and the rotor core 55 shown in Fig. 5 as the rotor core.
Instead of cutting and heating the outer circumference of the upper end of the rotor core as performed conventionally, the compressor of the present invention uses the stator core 57 formed by automatically stacking respective required numbers of stator core members A, B to form the stepped portion 57-3 on a position where the stator lower portion 57-2 adjoins the stator upper portion 57-1. Accordingly, it is possible to prevent the outer circumference of the upper end 55A of the rotor core 55 (not shown) from contacting the inner circumference of the upper end 57A of the stator core even at the time of starting or frequently repeating starting-running. Accordingly, stable running can be achieved over a long period with high reliability.

(Second Embodiment)

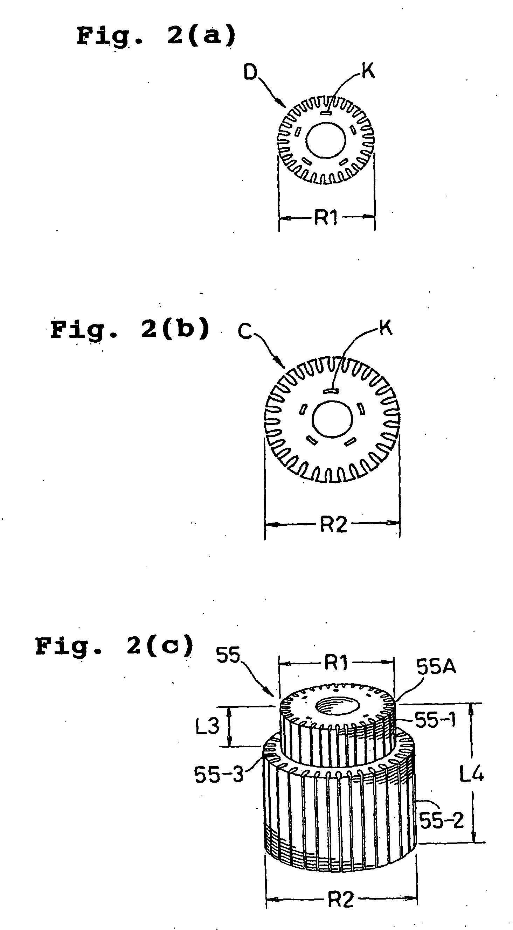

Fig. 2 (a), (b) and (c) are illustrative views illustrating an embodiment associated with a rotor core in the compressor of the present invention.
Fig. 2(a) is an illustrative view illustrating a rotor core member D for use in formation of a rotor upper portion 55-1 of a rotor core 55 in the compressor of the present invention.
Fig. 2(b) is an illustrative view illustrating a rotor core member C for use in formation of a rotor lower portion 55-2 of the rotor core 55 in the compressor of the present invention.
Fig. 2(c) is an illustrative view illustrating the rotor core 55 in the compressor of the present invention.

The rotor lower portion 55-2 of the rotor core 55 is formed by pressurizing and automatically stacking a required number of rotor core members C having a certain outer diameter (R2) such that an air gap between the outer circumference of the rotor lower portion 55-2 and the inner circumference of the stator core (not shown) is retained at an appropriate value. A rotor upper portion 55-1 of the rotor core 55 adjacent to the rotor lower portion 55-2 is formed by automatically stacking a required number of rotor core members D having a smaller outer diameter (R1) than the outer diameter (R2). A stepped portion 55-3 is formed on a position where the rotor lower portion 55-2 adjoins the rotor upper portion 55-1 in the rotor core 55. Others are similar to those of the rotor core 55 shown in Fig. 5. The rotor lower portion 55-2 and the rotor upper portion 55-1 are designed to have the same inner diameter.
In order to manufacture the rotor core members C, D and the rotor core 55, the punch shown in Fig. 4 is reconstructed. A steel belt S is then supplied continuously in between the male molds and the female molds while the male molds are moved up and down to punch out the steel belt S at required locations in two lines zigzag along the width and sequentially along the length to manufacture the rotor core members C, D having a plurality of crimps. A required number of the manufactured rotor core members C are automatically and sequentially pressurized and stacked to form the rotor lower portion 55-2. In addition, a required number of the rotor core members D are automatically and sequentially pressurized and stacked thereon to form the rotor upper portion 55-1, thus producing the rotor core 55.
Preferably, L3 denoting a length of the rotor upper portion 55-1 and L4 denoting a total length of [(the length L3 of the rotor upper portion 55-1) + (the length of the rotor lower portion 55-2)] have a relation represented by the following expression (3), and R2 denoting the outer diameter of the rotor lower portion 55-2 and R1 denoting the outer diameter of the rotor upper portion 55-1 have a relation represented by the following expression (4):

$$[(L3)/(L4)] \times 100 = 0.01\text{-}50 \ (\%) \quad \dots \ (3)$$

$$[(R1)/(R2)] \times 100 = 80\text{-}99.99 \ (\%) \quad \dots \ (4).$$

If $[(L3)/(L4)] \times 100$ has a value below 0.01 (%), the outer circumference of the upper end 55A of the rotor core 55 may not be prevented from contacting the inner circumference of the upper end 57A of the stator core 57 (not shown) possibly at the time of starting or frequently repeating starting-running. If it exceeds 50 (%), the running property is worsened.
If $[(R1)/(R2)] \times 100$ has a value below 80 (%), the running property is worsened. If it exceeds 99.99 (%), the outer circumference of the upper end 55A of the rotor core 55 may not be prevented from contacting the inner circumference of the upper end 57A of the stator core 57 (not shown) possibly at the time of starting or frequently repeating starting-running.
The compressor according to the second embodiment of the present invention is similar to the compressor shown in Fig. 3 except for the use of the above rotor core 55 and the stator core 57 shown in Fig. 6 as the stator core.
Instead of cutting and heating the outer circumference of the upper end of the rotor core as performed conventionally, the compressor of the present invention uses the rotor core 55 formed by automatically stacking respective required numbers of rotor core members C, D to form the stepped portion 55-3 on a position where the rotor lower portion 55-2 adjoins the rotor upper portion 55-1. Accordingly, it is possible to prevent the outer circumference of the upper end 55A of the rotor core 55 from contacting the inner circumference of the upper end 57A of the stator core 57 even at the time of starting or frequently repeating starting-running. Accordingly, stable running can be achieved over a long period with high reliability.

In the embodiments, the example of the stator core 57 formed of the stator upper portion 57-1 with a larger inner diameter and the stator lower portion 57-2 with a smaller inner diameter and the example of the rotor core formed of the rotor upper portion 55-1 with a smaller outer diameter and the rotor lower portion 55-2 with a larger outer diameter are separately described though they may be used solely or in combination.

If the use in combination, L1 denoting a length of the stator upper portion 57-1 and L2 denoting a total length of [(the length L1 of the stator upper portion 57-1) + (the length of the stator lower portion)] have a relation represented by the following expression (1); D1 denoting the inner diameter of the stator lower portion 57-2 and D2 denoting the inner diameter of the stator upper portion 57-1 have a relation represented by the following expression (2); L3 denoting a length of the rotor upper portion 55-1 and L4 denoting a total length of [(the length L3 of the rotor upper portion 55-1) + (the length of the rotor lower portion 55-2)] have a relation represented by the following expression (3); and R2 denoting the outer diameter of the rotor lower portion 55-2 and R1 denoting the outer diameter of the rotor upper portion 55-1 have a relation represented by the following expression (4). Even in such the relations, the outer circumference of the upper end 55A of the rotor core 55 can be surely prevented from contacting the inner circumference of the upper end 57A of the stator core 57.

$$[(L1)/(L2)] \times 100 = 0.01\text{-}50 \ (\%) \quad \dots \ (1)$$

$$[(D1)/(D2)] \times 100 = 80\text{-}99.99 \ (\%) \quad \dots \ (2)$$

$$[(L3)/(L4)] \times 100 = 0.01\text{-}50 \ (\%) \quad \dots \ (3)$$

$$[(R1)/(R2)] \times 100 = 80\text{-}99.99 \ (\%) \quad \dots \ (4).$$

In the above description, the rotary compressor is described though the compressor type in the present invention is not particularly limited. Specifically, the present invention is also applicable to a reciprocating compressor, a vibrating compressor, a multi-vane rotary compressor, and a scrolling compressor. The number of compressions may include at least one stage.

The compressor of the present invention is available in home air conditioners, business air conditioners (packaged air conditioners), vehicular air conditioners, home refrigerators, business refrigerators, business freezers, business freezers/ refrigerators, showcases, vending machines, and hot water suppliers.

Instead of cutting and heating the outer circumference of the upper end of the rotor core as performed conventionally, the compressor of the present invention uses the stator core or the rotor core formed by automatically stacking respective required numbers of stator core members A, B or rotor core members C, D to form the stepped portion on a position where the lower portion adjoins the upper portion. Accordingly, it is possible to form a low-cost, high-precision induction electric element with a suppressed increase in process steps. In addition, it is possible to prevent the outer circumference of the upper end of the rotor core from contacting the inner circumference of the upper end of the stator core even at the time of starting or frequently repeating starting-running. Accordingly, stable running can be achieved over a long period with high reliability as a remarkable effect, which provides a high industrial usefulness.

**Claims**

1. A compressor with an induction electric element, comprising:

   a hermetic container (50);
   a compressive element (53) housed in a lower portion of the container (50);
   and an induction electric element (52) housed in an upper portion of the container (50), the induction electric element (52) including a stator core (57) fixedly attached on an inner wall of the hermetic container (50) to drive the compressive element (53), and a rotor core (55) attached to a rotation axis (54) and inserted in the stator core (57), the compressive element (53) operative to compress a refrigerant led therein and discharge the compressed refrigerant to external from the hermetic container (50), **characterized in that**
the stator core (57) has a stator lower portion (57-2) formed by automatically stacking a required number of stator core members (A) having a certain inner diameter (D1) such that an appropriate air gap is retained between the stator lower portion (57-2) and the rotor core (55), a stator upper portion (57-1) formed adjacent to the stator lower portion (57-2) by automatically stacking a required number of stator core members (B) having a larger inner diameter (D2) than the inner diameter (D1) of the stator lower portion (57-2), and a stepped portion (57-3) formed on a position where the stator lower portion (57-2) adjoins the stator upper portion (57-1),
and that L1 denoting a length of the stator upper portion and L2 denoting a total length of [(the length of the stator upper portion) + (the length of the stator lower portion)] have a relation represented by the following expression (1), and wherein D1 denoting the inner diameter of the stator lower portion and D2 denoting the inner diameter of the stator upper portion (57-1) have a relation represented by the following expression (2):

$$[(L1)/(L2)] \times 100 = 0.01\text{-}50 \ (\%) \qquad \text{.... (1)}$$

$$[(D1)/(D2)] \times 100 = 80\text{-}99.99 \ (\%) \qquad \text{.... (2)}.$$

2. A compressor with an induction electric element, comprising:

a hermetic container (50);
a compressive element (53) housed in a lower portion of the container (50);
and an induction electric element (52) housed in an upper portion of the container (50), the induction electric element (52) including a stator core (57) fixedly attached on an inner wall of the hermetic container (50) to drive the compressive element (53), and a rotor core (55) attached to a rotation axis (54) and inserted in the stator core (57), the compressive element (53) operative to compress a refrigerant led therein and discharge the compressed refrigerant to external from the hermetic container (50), **characterized in that**
the rotor core has a rotor lower portion (55-2) formed by automatically stacking a required number of rotor core members (C) having a certain outer diameter (R2) such that an appropriate air gap is retained between the rotor lower portion (55-2) and the stator core (57), a rotor upper portion (55-1) formed adjacent to the rotor lower portion (55-2) by automatically stacking a required number of rotor core members (D) having a smaller outer diameter (R1) than the outer diameter (R2) of the rotor lower portion (55-2), and a stepped portion (55-3) formed on a position where the rotor lower portion (55-2) adjoins the rotor upper portion (55-1), and
that L3 denoting a length of the rotor upper portion(55-1) and L4 denoting a total length of [(the length of the rotor upper portion) + (the length of the rotor lower portion)] have a relation represented by the following expression (3), and wherein R2 denoting the outer diameter (R2) of the rotor lower portion (55-2) and R1 denoting the outer diameter of the rotor upper portion (55-1) have a relation represented by the following expression (4):

$$[(L3)/(L4)] \times 100 = 0.01\text{-}50 \ (\%) \qquad \text{.... (3)}$$

$$[(R1)/(R2)] \times 100 = 80\text{-}99.99 \ (\%) \qquad \text{.... (4)}.$$

**Patentansprüche**

1. Ein Kompressor mit elektrischem Induktionselement, enthaltend:

einen abgeschlossenen Behälter (50);
ein Kompressionselement (53), das in einem unteren Bereich des Behälters (50) aufgenommen ist; und
ein elektrisches Induktionselement (52), das in einem oberen Bereich des Behälters (50) aufgenommen ist, wobei das elektrische Induktionselement (52) einen Statorkern (57), der an einer Innenwand des abgeschlossenen Behälters (50) fixiert ist, um das Kompressionselement (53) anzutreiben, und

einen Rotorkern (55), der an einer Rotationsachse (54) angeordnet und in den Statorkern (57) eingesetzt ist, wobei das Kompressionselement (53) dazu dient, ein darin geführtes Kühlmittel zu komprimieren und das komprimierte Kühlmittel in das Äußere des abgeschlossenen Behälter (50) zu entladen, enthält,

**dadurch gekennzeichnet,**
**dass** der Statorkern (57) einen unteren Statorbereich (57-2), der dadurch gebildet ist, indem die benötigte Anzahl von Statorkernteilen (A), welche einen gewissen Innendurchmesser (D1) aufweisen, gestapelt werden, sodass ein entsprechender Luftspalt zwischen dem unteren Statorbereich (57-2) und dem Rotorkern (55) beibehalten wird, und einen oberen Statorbereich (57-1), der benachbart zu dem unteren Statorbereich (57-2) ausgebildet ist, indem die benötigte Anzahl der Statorkernteile (B), die einen größeren Innendurchmesser (D2) als die Innendurchmesser (D1) des unteren Statorbereichs (57-2) aufweisen, gestapelt werden, und einen gestuften Bereich (57-3), der an einer Position ausgebildet ist, an der der untere Statorbereich (57-2) an den oberen Statorbereich (57-1) anschließt, aufweist, wobei L1, welches die Länge des oberen Statorbereichs bezeichnet, und L2, welches die Gesamtlänge des [ (die Länge des oberen Statorbereichs) + (die Länge des unteren Statorbereichs) ] bezeichnet, eine Beziehung aufweisen, die durch folgende Gleichung (1) ausgedrückt wird, und wobei D1, welches den Innendurchmesser des unteren Statorbereichs bezeichnet, und D2, welches den Innendurchmesser des oberen Statorbereichs (57-1) bezeichnet, eine Beziehung aufweisen, die durch die folgende Gleichung (2) festgelegt ist:

$$[ (L1) / (L2) ] \times 100 = 0{,}01\text{-}50 \ (\%) \qquad \ldots(1)$$

$$[ (D1) / (D2) ] \times 100 = 80\text{-}99{,}99 \ (\%) \qquad \ldots(2)$$

2. Ein Kompressor mit elektrischem Induktionselement, enthaltend:

einen abgeschlossenen Behälter (50);
ein Kompressionselement (53), das in einem unteren Bereich des Behälters (50) aufgenommen ist; und
ein elektrisches Induktionselement (52), das in einem oberen Bereich des Behälters (50) aufgenommen ist, wobei das elektrische Induktionselement (52) einen Statorkern (57), der an einer Innenwand des abgeschlossenen Behälters (50) fixiert ist, um das Kompressionselement (53) anzutreiben, und einen Rotorkern (55), der an einer Rotationsachse (54) angeordnet und in den Statorkern (57) eingesetzt ist, wobei das Kompressionselement (53) dazu dient, ein darin geführtes Kühlmittel zu komprimieren und das komprimierte Kühlmittel in das Äußere des abgeschlossenen Behälter (50) zu entladen, enthält,

**dadurch gekennzeichnet,**
**dass** der Rotorkern einen unteren Rotorbereich (55-2), der dadurch gebildet ist, indem die benötigte Anzahl von Rotorkernteilen (C), welche einen gewissen Außendurchmesser (R2) aufweisen, gestapelt werden, sodass ein entsprechender Luftspalt zwischen dem unteren Rotorbereich (55-2) und dem Statorkern (57) beibehalten wird, einen oberer Rotorbereich (55-1), der benachbart zu dem unteren Rotorbereich (55-2) ausgebildet ist, indem die benötigte Anzahl der Rotorkernteile (D), die einen kleineren Außendurchmesser (R1) als der Außendurchmesser (R2) des unteren Rotorbereichs (55-2) aufweisen, gestapelt werden, und einen gestuften Bereich (55-3), der an einer Position ausgebildet ist, an der der untere Rotorbereich (55-2) an dem oberen Rotorbereich (55-1) anschließt, aufweist, wobei L3, welches die Länge des oberen Rotorbereichs (55-1) bezeichnet und L4, welches die Gesamtlänge des [ (die Länge des oberen Rotorbereichs) + (die Länge des unteren Rotorbereichs) ] bezeichnet, eine Beziehung aufweisen, die durch folgende Gleichung (3) ausgedrückt wird, und wobei R2, welches den Außendurchmesser (R2) des unteren Rotorbereichs (55-2) bezeichnet, und R1, welches den Außendurchmesser des oberen Rotorbereichs (55-1) bezeichnet, eine Beziehung aufweisen, die durch die folgende Gleichung (4) festgelegt ist:

$$[ (L3) / (L4) ] \times 100 = 0{,}01\text{-}50 \ (\%) \qquad \ldots(3)$$

$$[ (R1) / (R2) ] \times 100 = 80\text{-}99{,}99 \ (\%) \qquad \ldots(4)$$

**Revendications**

1. Compresseur avec élément électrique d'induction, comprenant :

   un conteneur hermétique (50) ;
   un élément de compression (53) logé dans une partie inférieure du conteneur (50) ;
   et un élément électrique d'induction (52) logé dans une partie supérieure du conteneur (50), l'élément électrique d'induction (52) comportant un noyau de stator (57) fixé solidement sur une paroi interne du conteneur hermétique (50) pour entraîner l'élément de compression (53), et un noyau de rotor (55) fixé à un axe de rotation (54) et inséré dans le noyau de stator (57), l'élément de compression (53) opérant pour comprimer un réfrigérant amené dans celui-ci et évacuer le réfrigérant comprimé vers l'extérieur depuis le conteneur hermétique (50), **caractérisé en ce que**
   le noyau de stator (57) présente une partie inférieure de stator (57-2) formée en empilant automatiquement un nombre requis d'éléments de noyau de stator (A) présentant un certain diamètre interne (D1) de telle sorte qu'un entrefer approprié est retenu entre la partie inférieure de stator (57-2) et le noyau de rotor (55), une partie supérieure de stator (57-1) formée de manière adjacente à la partie inférieure de stator (57-2) en empilant automatiquement un nombre requis d'éléments de noyau de stator (B) présentant un diamètre interne (D2) plus grand que le diamètre interne (D1) de la partie inférieure de stator (57-2), et une partie étagée (57-3) formée sur une position dans laquelle la partie inférieure de stator (57-2) est attenante à la partie supérieure de stator (57-1),
   et **en ce que** L1 désignant une longueur de la partie supérieure de stator et L2 désignant une longueur totale de [(la longueur de la partie supérieure de stator) + (la longueur de la partie inférieure de stator) présentent une relation représentée par l'expression suivante (1), et dans laquelle D1 désignant le diamètre interne de la partie inférieure de stator et D2 désignant le diamètre interne de la partie supérieure de stator (57-1) présentent une relation représentée par l'expression suivante (2) :

$$[(L1)/(L2)] \times 100 = 0{,}01\text{-}50(\%) \qquad \ldots(1)$$

$$[(D1)/(D2)] \times 100 = 80\text{-}99{,}99(\%) \qquad \ldots(2)$$

2. Compresseur avec élément électrique d'induction, comprenant :

   un conteneur hermétique (50) ;
   un élément de compression (53) logé dans une partie inférieure du conteneur (50) ;
   et un élément électrique d'induction (52) logé dans une partie supérieure du conteneur (50), l'élément électrique d'induction (52) comportant un noyau de stator (57) fixé solidement sur une paroi interne du conteneur hermétique (50) pour entraîner l'élément de compression (53), et un noyau de rotor (55) fixé à un axe de rotation (54) et inséré dans le noyau de stator (57), l'élément de compression (53) opérant pour comprimer un réfrigérant amené dans celui-ci et évacuer le réfrigérant comprimé vers l'extérieur depuis le conteneur hermétique (50), **caractérisé en ce que**
   le noyau de rotor présente une partie inférieure de rotor (55-2) formée en empilant automatiquement un nombre requis d'éléments de noyau de rotor (C) présentant un certain diamètre externe (R2) de telle sorte qu'un entrefer approprié est retenu entre la partie inférieure de rotor (55-2) et le noyau de stator (57), une partie supérieure de rotor (55-1) formée de manière adjacente à la partie inférieure de rotor (55-2) en empilant automatiquement un nombre requis d'éléments de noyau de rotor (D) présentant un diamètre interne (R1) plus petit que le diamètre externe (R2) de la partie inférieure de rotor (55-2), et une partie étagée (55-3) formée sur une position dans laquelle la partie inférieure de rotor (55-2) est attenante à la partie supérieure de rotor (55-1),
   et **en ce que** L3 désignant une longueur de la partie supérieure de rotor (55-1) et L4 désignant une longueur totale de [(la longueur de la partie supérieure de rotor) + (la longueur de la partie inférieure de rotor) présentent une relation représentée par l'expression suivante (3), et dans laquelle R2 désignant le diamètre externe (R2) de la partie inférieure de rotor (55-2) et R1 désignant le diamètre externe de la partie supérieure de rotor (55-1) présentent une relation représentée par l'expression suivante (4) :

$$[(L3)/(L4)] \times 100 = 0,01\text{-}50(\%) \qquad \ldots(3)$$

$$[(R1)/(R2)] \times 100 = 80\text{-}99,99(\%) \qquad \ldots(4)$$

$$[(L3)/(L4)] \times 100 = 0,01\text{-}50(\%) \qquad \ldots(3)$$

## Fig. 1(a)

## Fig. 1(b)

## Fig. 1(c)

**Fig. 2(a)**

**Fig. 2(b)**

**Fig. 2(c)**

## Fig. 3
## PRIOR ART

# Fig. 4
# PRIOR ART

Fig. 5(a)

Fig. 5(b)

## Fig. 6(a)

## Fig. 6(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3557046 B
- US 4881879 A
- US 5233254 A